# EUROPÄISCHE PATENTANMELDUNG

(11) **EP 2 199 187 A1**
(43) Veröffentlichungstag der Anmeldung: **23.06.2010**
(21) Anmeldenummer: 08021956.1
(22) Anmeldetag: 18.12.2008
(51) Int. Cl.: B62D 15/02

(54) **Lenkwinkelsensor eines Lenkstockmoduls eines Kraftfahrzeuges**

(71) Anmelder: Delphi Technologies, Inc., Troy, Michigan 48007 (US)
(72) Erfinder: Schwarz, Sebastian, 55546 Fürfeld (DE); Petry, Andreas, 55576 Badenheim (DE); Rudolph, Gerd, 55459 Aspisheim (DE)
(74) Vertreter: Becker, Bernd

(57) **Zusammenfassung**

Ein Lenkwinkelsensor eines Lenkstockmoduls eines Kraftfahrzeuges umfasst mindestens ein in einem Sensorgehäuse (15) gelagertes ortsfestes Messzahnrad (8), an dem Winkeländerungen einer Lenksäule mittels mit einem Bordnetz verbundener elektronischer Sensoreinrichtungen (12, 13) erfasst werden. Um insbesondere Instandhaltungs- sowie andere Montagearbeiten am Lenkstockmodul zu erleichtern, sind der Lenkwinkelsensor (5) sowie die Sensoreinrichtungen (12, 13) als eine eigenständige, selbständig handhabbare Baugruppe ausgebildet, wobei die Sensoreinrichtungen (12, 13) auf einer Leiterplatte (11) vorgesehen sind, die als Bestandteil des Lenkwinkelsensors (5) auf dem Sensorgehäuse (15) angeordnet ist.

## Beschreibung

Die Erfindung bezieht sich auf einen Lenkwinkelsensor eines Lenkstockmoduls eines Kraftfahrzeuges mit mindestens einem in einem Sensorgehäuse gelagerten ortsfesten Messzahnrad, an dem Winkeländerungen einer Lenksäule mittels mit einem Bordnetz verbundener elektronischer Sensoreinrichtungen erfasst werden.

Die EP 1 487 687 B1 offenbart ein Lenkstockmodul, dessen Modulgehäuse unterhalb des Lenkrades am Mantelrohr der Lenksäule ortsfest befestigt ist. Ein Lenkwinkelsensor, dessen Sensorgehäuse auf einer zentralen Leiterplatte des Lenkstockmoduls angeordnet ist, dient der Erfassung von Winkeländerungen der Lenksäule. Auf der Leiterplatte sind gleichzeitig Messsensoren angeordnet, die die Position von zwei Messräder sensieren und deren Signale von elektronischen Schaltungen im Sinne der Ermittlung der vor der Lenksäule zurückgelegten Lenkwinkels ausgewertet werden. Die Messsensoren erstrecken sich hierbei durch in der zentralen Leiterplatte ausgebildete Ausnehmungen hindurch. Die Messräder tragen stirnseitig Messmagnetringe, deren Position von den Messsensoren ermittelt wird.

Als weniger vorteilhaft anzusehen ist bei dem vorbekannten Lenkstockmodul die getrennte Anordnung der Messsensoren vom Lenkwinkelsensor, die insbesondere bei Reparaturen bzw. einem Austausch des defekten Lenkwinkelsensors oder einem Nachrüsten eines Kraftfahrzeuges mit einem Lenkwinkelsensor erhebliche Montageprobleme verursacht.

Im Weiteren zeigt die EP 1 274 606 A1 einen Lenkstockschalter mit einer in einem mantelrohrfesten Gehäuse angeordneten elektrischen Verbindungseinrichtung zwischen Lenkrad und Lenksäule, die einen spiralförmig aufgewickelten, flexiblen elektrischen Leiter umfasst, der in ein Gehäuseoberteil eingesetzt und von einem lenkradfesten Deckel abgedeckt ist, wobei der Leiter zum einen über eine Anschlusseinheit mit der Lenkradseite und zum anderen mit einer mit dem Bordnetz verbundenen zentralen Leiterplatte gekoppelt ist. Der Verbindungseinrichtung ist innerhalb des Gehäuses ein als Zahnrad ausgebildeter Rotor eines Lenkwinkelsensors zugeordnet, dessen gehäuseseitiger Stator die Leiterplatte kontaktiert. Der Stator ist als die Umdrehungen des Zahnrades detektierender Sensor ausgebildet, der mittels die Leiterplatte kontaktierender Anschlusskontakte mit dem Bordnetz in Verbindung steht. Demnach ist die Leiterplatte zwingend für die Funktionalität des Lenkwinkelsensors erforderlich.

Es ist daher Aufgabe der vorliegenden Erfindung einen Lenkwinkelsensor der eingangs genannten Gattung vorzuschlagen, bei dem die vorhin genannten Probleme weitgehend eliminiert sind. Außerdem soll eine hohe Genauigkeit der vom Lenkwinkelsensor gelieferten Information gewährleistet sein.

Erfindungsgemäß wird die Aufgabe gelöst durch die Ausgestaltung des Lenkwinkelsensors als eine eigenständige, selbständig handhabbare Baugruppe, wobei die Sensoreinrichtungen auf einer Leiterplatte vorgesehen sind, die als Bestandteil des Lenkwinkelsensors auf seinem Sensorgehäuse angeordnet ist.

Durch diese Maßnahmen wird eine besonders kompakte Ausführung des Lenkstockmoduls erreicht, bei der die Anordnung der Sensoreinrichtungen sich nicht störend auf die Lagerung des Messzahnrades auswirkt, da die Sensoreinrichtungen außerhalb des Sensorgehäuses befestigt sind. Demnach ist es insbesondere möglich, die Sensoreinrichtungen fluchtend zu einer Achse des Messzahnrades anzuordnen, die im Sensorgehäuse gelagert ist. Signale des Messzahnrades, wie beispielsweise ein Magnetfeld, durchdringen das geschlossene Sensorgehäuse und werden von den Sensoreinrichtungen detektiert.

Zwecks Erzielung einer zuverlässigen Funktion des Lenkstockmoduls, ist in Weiterbildung die Leiterplatte mit elektrischen Kontaktelementen versehen, die dem Anschluss des Lenkwinkelsensors an ein Bordnetz des Kraftfahrzeuges dienen.

Um den Einfluss eines unrunden Laufs der Lenksäule auf das Ausgangssignal des Lenkwinkelsensors zu eliminieren, steht zweckmäßigerweise ein lenksäulenseitiger Rotor mit einem Ausgleichszahnrad im Eingriff steht, das einen Toleranzausgleich zwischen dem Rotor und dem Sensorgehäuse gewährleistet und seinerseits mit dem ebenfalls als Zahnrad ausgebildeten ersten Messzahnrad im Eingriff steht. Bevorzugt sind sowohl der Rotor als auch der Lenkwinkelsensor im Modulgehäuse angeordnet.

In weiterer Ausgestaltung treibt das Messzahnrad unter Zwischenschaltung eines Zwischenrades ein zweites, als ein Zahnrad ausgebildetes Messzahnrad an. Diese Maßnahme wirkt sich insbesondere auf die Messgenauigkeit des Lenkwinkelsensors aus. Dabei ist es besonders vorteilhaft, jedem der Messzahnräder jeweils zwei in den Sensoreinrichtungen enthaltene, als Streufeldsensoren ausgeführte Sensorelemente zuzuordnen.

Eine weitere Erhöhung der Messgenauigkeit des Lenkwinkelsensors wird bevorzugt dadurch erreicht, dass das Ausgleichszahnrad mit dem ersten Messzahnrad eine schnell laufende und das Zwischenrad mit dem zweiten Messzahnrad eine langsam laufende Stufe bildet. Dabei stehen die Drehzahl der schnell laufenden Stufe und die Drehzahl der langsam laufenden Stufe bei einer Betätigung des Lenkwinkelsensors in einem Verhältnis von etwa 10 : 1 zueinander.

Damit eine besonders hohe Zuverlässigkeit beim Betrieb des Lenkwinkelsensors gegeben ist, sind nach einer Weiterbildung die Messzahnräder jeweils durch eine volle Scheibe aus magnetischem Werkstoff sowie einen die Scheibe radial umgreifenden Zahnkranz ausgebildet. Außerdem werden hier durch stabile, präzise arbeitende Bauteile bereitgestellt.

Schließlich sind zweckmäßigerweise die Sensoreinrichtungen als elektronische integrierte Bauteile mit Mikroprozessoren ausgebildet, die die Auswertung der Messsignale der Sensorelemente durchführen.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispieles unter Bezugnahme auf die zugehörigen Zeichnungen näher erläutert. Es zeigt:

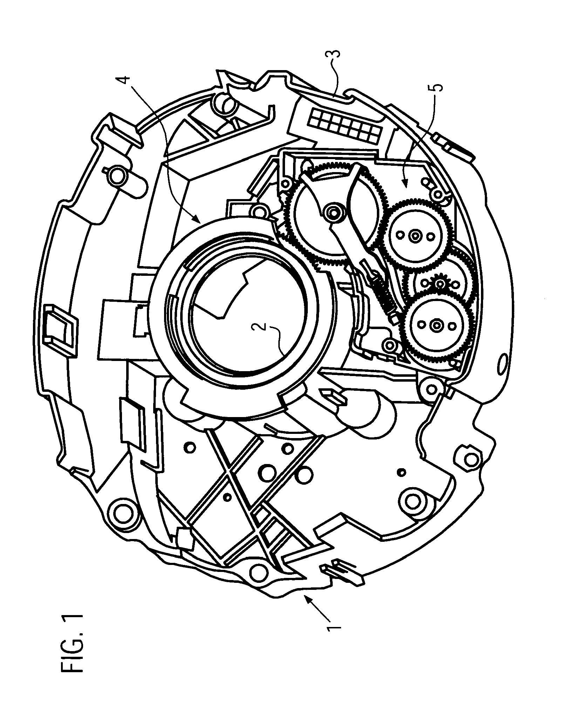

- Fig.1: eine Teildarstellung eines Lenkstockmoduls eines Kraftfahrzeuges mit einem erfindungsgemäßen Lenkwinkelsensor ohne Deckel,

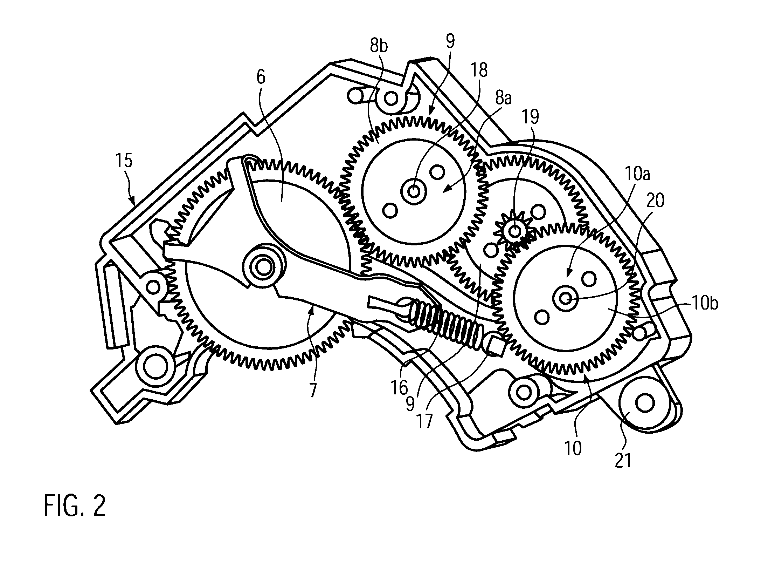

- Fig.2: eine vergrößerte Darstellung des Lenkwinkelsensors nach Fig. 1,
- Fig.3: eine Darstellung des Lenkwinkelsensors im vollständig zusammengebauten Zustand als handhabbare Baugruppe und
- Fig.4: eine Explosionsdarstellung des Lenkwinkelsensors nach Fig. 3.

Das Lenkstockmodul umfasst ein Modulgehäuse 1, in dessen mittlerem Bereich eine kreisförmige Öffnung 2 zur Befestigung des Lenkstockmoduls an einem nicht dargestellten Mantelrohr eines Kraftfahrzeuges ausgeformt ist. Durch das Mantelrohr erstreckt sich eine ebenfalls nicht gezeigte Lenksäule, deren freies Ende oberhalb des Modulgehäuses 1 ein Lenkrad trägt. Eine elektrische Schnittstelle 3 dient der Verbindung elektrischer Bauteile des Lenkstockmoduls mit einem Bordnetz des Kraftfahrzeuges. Ein koaxial zur Öffnung 2 angeordneter Rotor 4, der mit der Lenksäule in Verbindung steht, ist als Zahnrad ausgebildet und dient der Betätigung eines Lenkwinkelsensors 5, mit dem durch Drehen des Lenkrades hervorgerufene Winkeländerungen der Lenksäule erfasst werden.

Der Rotor 4 ist mit einem Ausgleichszahnrad 6 im Eingriff, das mittels eines Käfigs 7 in einem Sensorgehäuse 15 des Lenkwinkelsensors 5 schwimmend gelagert ist. Die Befestigung des Sensorgehäuses 15 im Modulgehäuse 1 erfolgt mittels Schraub- und/oder Steckverbindungen unter Zwischenanordnung elastischer Dämpfungselemente 21. Zur schwimmenden Lagerung des Ausgleichszahnrads 6 im Sensorgehäuse 15 ist eine Zugfeder 16 vorgesehen, die einerseits an dem Käfig 7 und andererseits an einem an dem Sensorgehäuse 15 angeformten Haltevorsprung 17 festgelegt ist. Das Ausgleichszahnrad 6 steht im Eingriff mit einem ebenfalls im Sensorgehäuse 15 drehbar gelagerten ersten Messzahnrad 8, das über ein Zwischenrad 9 ein zweites Messzahnrad 10 antreibt. Die Messzahnräder 8, 10 sind auf Lagerachsen 18, 20 und das Zwischenrad 9 auf einem Lagerbolzen 19 des Sensorgehäuses 15 drehbar gelagert. Das Übersetzungsverhältnis zwischen dem Ausgleichszahnrad 6 und dem ersten Messzahnrad 8 ist vorzugsweise derart getroffen, dass eine schnell laufende Stufe gebildet ist, bei der beispielsweise ca. 4,2 Umdrehungen der Lenksäule, die einem Drehwinkel von 1500° entsprechen, in zehn Umdrehungen des ersten Messzahnrades 8 umgesetzt werden. Dagegen ist die Wahl der Verzahnung des Zwischenrades 9 und des zweiten Messzahnrades 10 derart getroffen, dass sie eine "langsam" laufende Stufe darstellen, bei der die ca. 4,2 Umdrehungen der Lenksäule, die einem Drehwinkel von 1500° entsprechen, in eine volle Umdrehung des zweiten Messzahnrades 8 umgesetzt werden. Demnach entsprechen 10 Umdrehungen der "schnellen" Stufe einer Umdrehung der "langsamen" Stufe. Die beiden Messzahnräder 8, 10 bestehen jeweils aus einer vollen Scheibe 8a, 10a aus magnetischem Werkstoff sowie einem die Scheibe 8a, 10a radial umgreifenden Zahnkranz 8b, 10b. Der Polwechsel der magnetischen Scheiben 8a, 10a erfolgt entlang einer durch die Mitte der Scheiben 8a, 10a sich erstreckenden Linie.

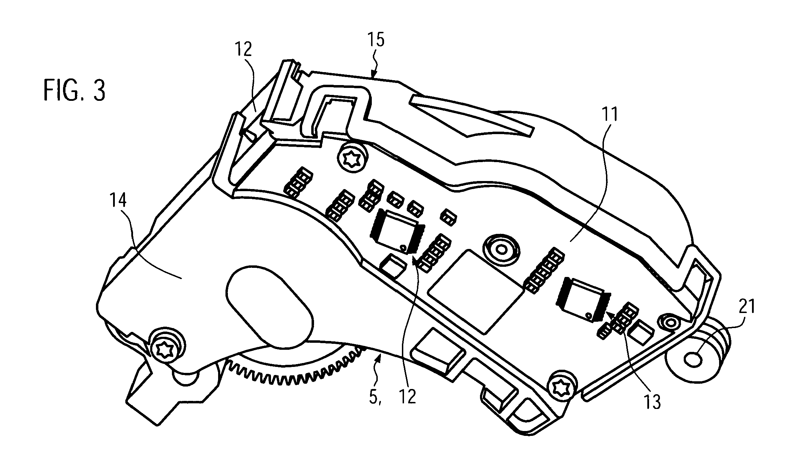

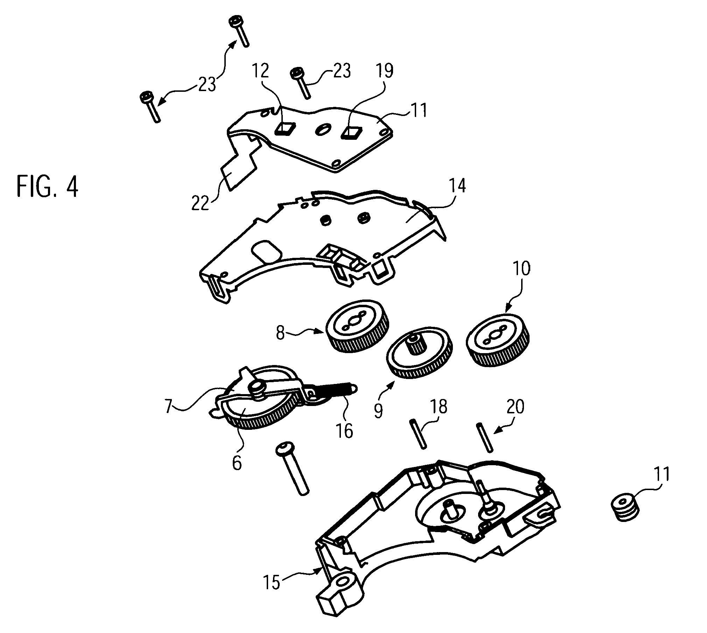

Das Sensorgehäuse 15 des Lenkwinkelsensors 5 ist von oben mittels eines Sensorgehäusedeckels 14 verschlossen, der oberhalb des Bereichs der Lagerung der beiden Messzahnräder 8, 10 sowie des Zwischenrades 9 eine Leiterplatte 11 trägt, die u. a. mit den Messzahnrädern 8, 10 zugeordneten, elektronischen integrierten Sensoreinrichtungen 12, 13 versehen ist. Das Sensorgehäuse 15, der Sensorgehäusedeckel 14 sowie die Leiterplatte 11 werden in zusammengebautem Zustand des Lenkwinkelsensors 5 mittels Schrauben 23 und/oder Klipsverbindungen 24 zusammengehalten. Zur Ermittlung der Bewegung der Messzahnräder 8, 10 sind in den Sensoreinrichtungen 12, 13 jeweils zwei nicht einzeln dargestellte, Änderungen eines Magnetfeldes erfassende Sensoren und auf der Leiterplatte 11 eine entsprechende den Sensoren zugeordnete Auswerteelektronik enthalten. Dem Anschluss der Sensoreinrichtungen 12, 13 sowie weiterer auf der Leiterplatte 11 vorhandener elektrischer oder elektronischer Komponenten an das Bordnetz des Kraftfahrzeuges dienen Kontaktelemente 22, die lediglich schematisch in Fig. 3 und 4 angedeutet sind. Mit Hilfe der Kontaktelemente 22 werden die Signale der auf der Leiterplatte 11 angeordneten elektronischen Sensoreinrichtungen 12, 13 ohne Zwischenschaltung weiterer elektronischer Komponenten direkt dem Bordnetz bzw. dem Bordcomputer zugeführt.

## Patentansprüche

1. Lenkwinkelsensor für ein Lenkstockmodul eines Kraftfahrzeuges, mit mindestens einem in einem Sensorgehäuse (15) gelagerten ortsfesten Messzahnrad (8), an dem Winkeländerungen einer Lenksäule mittels mit einem Bordnetz zu verbindender elektronischer Sensoreinrichtungen (12, 13) erfasst werden, **gekennzeichnet durch** die Ausgestaltung als eine eigenständige, selbständig handhabbare Baugruppe, wobei die Sensoreinrichtungen (12, 13) auf einer Leiterplatte (11) vorgesehen sind, die als Bestandteil des Lenkwinkelsensors (5) auf dem Sensorgehäuse (15) angeordnet ist.

2. Lenkwinkelsensor nach Anspruch 1, **dadurch gekennzeichnet, dass** die Leiterplatte (11) mit elektrischen Kontaktelementen (22) versehen ist, die dem Anschluss des Lenkwinkelsensors (5) an ein Bordnetz des Kraftfahrzeuges dienen.

3. Lenkwinkelsensor nach Anspruch 1, **dadurch gekennzeichnet, dass** ein lenksäulenseitiger Rotor (4) mit einem Ausgleichszahnrad (6) im Eingriff steht, das einen Toleranzausgleich zwischen dem Rotor (4) und dem Sensorgehäuse (15) gewährleistet und seinerseits mit dem ebenfalls als Zahnrad ausgebildeten ersten Messzahnrad (8) im Eingriff steht.

4. Lenkwinkelsensor nach Anspruch 1, **dadurch gekennzeichnet, dass** sowohl der Rotor (4) als auch der Lenkwinkelsensor (5) im Modulgehäuse (1) anzuordnen sind.

5. Lenkwinkelsensor nach einem der Ansprüche 1 bis 3, **dadurch gekennzeichnet, dass** das Messzahnrad (8) unter Zwischenschaltung eines Zwischenrades (9) ein zweites, als ein Zahnrad ausgebildetes Messzahnrad (10) antreibt.

6. Lenkwinkelsensor nach Anspruch 5, **dadurch gekennzeichnet, dass** jedem der Messzahnräder (8, 10) jeweils zwei in den Sensorein-richtungen (12, 13) enthaltene, als Streufeldsensoren ausgeführte Sensorelemente zugeordnet sind.

7. Lenkwinkelsensor nach einem der Ansprüche 1 bis 6, **dadurch gekennzeichnet, dass** das Ausgleichszahnrad (6) mit dem ersten Messzahnrad (8) eine schnell laufende Stufe bildet.

8. Lenkwinkelsensor nach einem der Ansprüche 1 bis 6, **dadurch gekennzeichnet, dass** das Zwischenrad (9) mit dem zweiten Messzahnrad (10) eine langsam laufende Stufe bildet.

9. Lenkwinkelsensor nach Anspruch 7 und 8, **dadurch gekennzeichnet, dass** die Drehzahl der schnell laufenden Stufe (6, 8) und die Drehzahl der langsam laufenden Stufe (9, 10) bei einer Betätigung des Lenkwinkelsensors (5) in einem Verhältnis von etwa 10:1 zueinander stehen.

10. Lenkwinkelsensor nach einem der Ansprüche 1 bis 9, **dadurch gekennzeichnet, dass** die Messzahnräder (8, 10) jeweils durch eine volle Scheibe (8a, 10a) aus magnetischem Werkstoff sowie einen die Scheibe (8a, 10a) radial umgreifenden Zahnkranz (8b, 10b) gebildet sind.

11. Lenkwinkelsensor nach einem der Ansprüche 1 bis 10,
**dadurch gekennzeichnet, dass** die Sensoreinrichtungen (12, 13) als elektronische integrierte Bauteile mit Mikroprozessoren ausgebildet sind, die die Auswertung der Messsignale der Sensorelemente durchführen.
